# EUROPEAN PATENT SPECIFICATION

(11) **EP 1 527 689 B1**
(45) Date of publication and mention of the grant of the patent: **13.12.2006**
(21) Application number: 04025642.2
(22) Date of filing: 28.10.2004
(51) Int. Cl.: A22B 5/00

(54) **Device and method for performing a treatment process on a carcass**
Verfahren und Vorrichtung zum bearbeiten von Tierkörpern
Procédé et appareil permettant le faconnage de la carcasse d'un animal

(30) Priority: 31.10.2003 DK 200301619
(43) Date of publication of application: 04.05.2005
(73) Proprietor: Slagteriernes Forskningsinstitut, 4000 Roskilde (DK)
(72) Inventor: Hansen, Niels Worsoe, 4320 Lejre (DK); Jensen, Niels R., 2900 Hellerup (DK)
(74) Representative: Hoffmann, Claus

(56) References cited:
- BE-A4- 1 007 533
- FR-A- 2 728 434
- US-A- 3 882 570
- US-A- 5 003 665
- US-A- 5 180 329
- US-A- 5 454 754
- US-B1- 6 178 643

## Description

### Technical field

The present invention relates to a device for performing a treatment process on the foreleg of a carcass, preferably a carcass half. Furthermore, it relates to a method for performing a treatment process on the foreleg of a carcass, preferably a carcass half, and use of said device. A prior art device and method is known from US-A-5003 665.

### Prior art

Carcasses on a slaughtering line can comprise two interconnected carcass halves, which can be hung up in a gambrel or in hooks. The carcass halves can hang together by the head, by the snout alone, by a piece of the fat of the neck or be completely separated. Furthermore, the carcass halves can be conveyed lying down on a conveyor belt. The present invention relates to handling of carcasses before or after they have been cut through, i.e. carcasses as well as carcass halves, as described above.

When a carcass is to be treated on a slaughtering line, measurement of the carcass is sometimes performed immediately before or after it has been placed in the slaughtering line. Based on this measurement of the carcass it is possible to calculate the distance from any point of hanging to the position where various treatment processes will be performed such as classification, marking, cutting, clipping, etc. This measurement of the carcass has shown that carcasses vary too much to perform all treatment processes based on one measurement. This is due to the fact that the variation increases concurrently the further away the treatment point is from the measurement point.

Furthermore, it has been found problematic to perform precise treatment processes on protruding parts, such as forelegs, hind legs, ears, etc. This is due to the fact that when about 300-400 animals are butchered on a slaughtering line per hour, which corresponds to a step cycle of about 9-12 seconds from arrival to a treatment station until arrival of the next, then in particular the protruding parts have some non-controlled movements owing to the inertia caused by the rapid movement, which is due to acceleration and deceleration from one treatment station to the next.

It is particularly problematic during treatment processes where cutting or clipping off must be very precise, e.g. in joints, in order to avoid bone remnants in the meat. Consequently, such treatment processes requiring high precision are often performed manually based on manual capture and fixation of the carcass together with detection prior to each treatment process.

The manual detection of the treatment position is often performed by an operator estimating or feeling his way to the position of a given anatomical part.

Manual processes in connection with a slaughtering line are often undesirable, because the speed by which the carcasses are treated on the slaughtering line is very high. It can be a strain to have to perform monotonous repeated work on the slaughtering line at high speed. In some cases it will be necessary to engage more operators to perform the process in order to keep the cycle time.

One special treatment process which is very difficult to perform automatically/mechanically with today's known methods of measuring a carcass is clipping off a toe on a foreleg of the carcass. The anatomical part can in this case be a malleolus. From the malleolus the cutting point can be found, which is in the joint between the shank bone and the middle joint. The cutting is made in the joint in order to avoid bone remnants in the meat, as the joint primarily consists of cartilage. The detection of the malleolus can be very difficult, as the placement of the malleolus varies considerably according to the build of the animal, and therefore the probability of precise cutting is small.

Furthermore, it is very important that constructions used for carrying out slaughtering line processes can be washed in between the treatment of one carcass and the next for hygienic reasons. Furthermore, it is important that these constructions are simple and robust to allow easy maintenance and replacement of defect parts, which often occur in high speed productions, such as slaughtering lines. Precisely in a moist environment with many vibrations and sources of contamination, it is difficult to use advanced measuring systems, such as use of photocells, picture processing (vision), etc. to carry out more precise measurements prior to separate precise treatment processes.

The purpose of the present invention is to provide a solution which can detect these difficult anatomical parts and in immediate connection herewith perform the difficult treatment processes, so that the manual operations are removed partly or completely.

Another purpose is to provide a solution with a simple construction, thus allowing easy cleaning and maintenance.

Yet another purpose is to provide a solution for capturing and detecting these difficult anatomical parts and in immediate connection herewith perform the difficult treatment processes.

### Summary of the invention

The present invention is new and characteristic in that the device comprises a gripping device, which is arranged to hold the foreleg, a sensor device, which is arranged to detect an anatomical part of the foreleg, and a tool device to perform a treatment process on the foreleg at a predetermined distance from the anatomical part.

It is hereby possible to mechanically detect an anatomical part of a foreleg, as the sensor device is moved along the surface of the carcass and therefore registers the character of the surface. Thus, the detection is made in a plain and simple way and with a simple mechanical construction, which can be implemented in connection with a slaughtering line either as a separate device or on an existing device, and therefore fitted in to follow the speed at which the carcass is treated.

Furthermore, according to the invention, a device with a construction which is easy to clean, maintain and repair and which is not sensitive to contamination is obtained. This is especially suitable in connection with a slaughtering line, where many carcasses are treated per hour.

When the device is used on a slaughtering line, the gripping device is brought into contact with the foreleg of a carcass, or a carcass half, and captures the foreleg. The gripping device holds the foreleg during detection of the anatomical part, so that the position of the sensor device while moving over the surface of the foreleg is known in relation to the gripping device. Subsequently the sensor device and the foreleg are moving in relation to one another, so that the sensor device can register the character of the foreleg and thereby register changes of the same during the movement, thus making it possible to detect the anatomical part. When the anatomical part has been detected, the tool device is started, so that the treatment process is performed based on the detection, e.g. at a predetermined distance from the anatomical part.

The term "anatomical part", which is used herein, means a part of a carcass or carcass half, such as for instance a malleolus. An anatomical part may also mean other protruding or hollowing parts of the carcass.

In a preferred embodiment according to the invention the device may comprise a moving means. The moving means may be arranged to move the sensor device along the foreleg in order to detect the anatomical part. The moving means moves the sensor device so that it can register the character of the surface of the foreleg. Movement of the sensor device instead of movement of the foreleg results in the foreleg becoming stationary, and therefore it is not varying significantly from the direction of motion of the carcass in the slaughtering line.

In another preferred embodiment the sensor device may advantageously comprise a first means, which, while the gripping device holds the foreleg, keeps a first sensing element in contact with the foreleg. In this way, a constant contact between the sensing elements and the surface of the foreleg is obtained when the sensor device is moved in relation to the foreleg at registration of the character of the surface and determination of the anatomical part, and thereby a more precise detection is obtained.

Furthermore, in an advantageous embodiment the device may comprise a second means and a second sensing element. This second sensing element is freely suspended in relation to the first sensing element, so that any difference in the sensing elements' individual positions is detected during movement of the sensor device along the foreleg over the anatomical part.

When the sensor device moves over a change in the surface of the carcass, then the first sensing element will, at the change, have a position which is different from the second sensing element or vice versa. The difference in the mutual distance from the first sensing element and the second sensing element provides a precise registration of the anatomical part.

Another advantage of providing the device with two sensing elements is that when the first sensing element is moved over a change in the surface of the foreleg, i.e. over the anatomical part, it is possible to initiate a stopping of the sensor device movement, so that a subsequent treatment process may be performed with precision in relation to the anatomical part. Such an early warning is very advantageous when the velocity is very high as on the slaughtering line, treating typically 300-400 carcasses per hour.

The sensor device may in a further expedient embodiment comprise a detection means for detection of the mutual position of the sensing elements.

In a preferred embodiment the detection means may comprise a transmitter placed in connection with the first sensing element and a receiver placed in connection with the second sensing element or vice versa. Said transmitter sends signals to the receiver when the sensor device is moved along the foreleg. When the first sensing element is moved over the anatomical part, the receiver registers that there is a mutual difference in the distance between the sensing elements based on the signal/signals transmitted from the transmitter. Consequently, determination of the anatomical part depends on a presetting of the device for determination of which mutual distance between the sensing elements that indicates that the sensor device has detected the anatomical part and not for example a small fold of the skin or a similar unevenness.

Furthermore, initiation of the treatment process can await that the receiver twice registers a mutual difference in the distance between the two sensing elements, as the first registered distance can be caused by vibrations in the device from the slaughtering line.

Registration can be reception of a signal or signals from the transmitter sent either when there is a change in the mutual distance between the sensing elements or sent continuously as pulses or as a continuous signal during the entire movement of the sensor device in relation to the foreleg. The treatment process may be set to start immediately after the signals for both sensing elements have been received or with a slight delay.

In another preferred embodiment the detection means may comprise a releaser placed in connection with the first sensing element and a sensor placed in connection with the second sensing element or vice versa. In this embodiment, the releaser is set to initiate the treatment process by influencing the sensor. When the sensor device is moved in relation to the foreleg, e.g. from the arm pit and down to the toe, the releaser initiates the treatment process when the first of the sensing elements is moved over the anatomical part, or when both sensing elements are moved over the anatomical part.

Furthermore, the device may suitably comprise a memory device, which is adapted to store the sensor device's positions during movement along the foreleg, and which is also adapted, based on the sensor device's position compared to the stored positions, to determine the anatomical part and consequently initiate the treatment process.

Furthermore, the gripping device may advantageously be placed on a swivel arm device. The swivel arm device may be arranged to bring the gripping device into contact with the foreleg, primarily from below and upwards, in a mainly vertical direction. In this advantageous embodiment the swivel arm device swings the gripping device, primarily from below and upwards, to achieve contact with for example a foreleg of a carcass at the passage between the leg and the rest of the carcass, i.e. the arm pit. The swivel function allows a moving foreleg to be captured, so that the moving foreleg is stopped immediately before the sensor device is moved along the surface of the foreleg. For example, the sensor device can be moved from the arm pit and towards the anatomical part while the gripping device holds the foreleg still.

The gripping device may also in another suitable embodiment comprise a support means, which is arranged to fixate the foreleg during processing. Thus, the support means fixates the foreleg to the gripping device by pressing the foreleg against the rest of the gripping device thus fixating the foreleg in a direction at right angles to the direction of motion of the sensor device. If the gripping device is moved in relation to the foreleg, such a support means will follow the shape of the foreleg thereby ensuring an almost constant pressure on the foreleg regardless of the shape of the moving foreleg.

Furthermore, the sensor device, the gripping device, the swivel arm device and the tool device may be moved along the foreleg during detection of the anatomical part in an even more advantageous embodiment. I.e. they can be placed immediately next to each other and moved concurrently in relation to the foreleg. A compact arrangement of the device is hereby obtained, allowing implementation at existing work stations on the slaughtering line.

In accordance with the invention the tool device may for example be shears, knife, marking equipment, scraping equipment or the like.

The present invention relates to a device for cutting off an anatomical segment and a sensor device for detecting an anatomical part, according to claims 13-17.

Furthermore, the present invention relates to a method for performing a treatment process on a foreleg of a carcass, preferably a carcass half, for which the method comprises fixation of the foreleg by means of a gripping device, detection of an anatomical part on the foreleg by means of a sensor device, and performing a treatment process on the foreleg at a predetermined distance from the anatomical part by means of a tool device. A precise detection and performance of a precise treatment process on a foreleg by means of the tool device are hereby obtained.

Finally, the present invention also relates to the use of a device, described above, for performing a treatment process on a foreleg of a carcass, preferably a carcass half.

### Brief description of the drawings

The invention is explained in detail below with reference to particularly preferred embodiments and the drawing, in which
Fig. 1 shows in perspective a preferred embodiment of a part of the device according to the present invention, which comprises a gripping device and a sensor device.
Fig. 2 shows in perspective a preferred embodiment of the device according to the present invention.
Fig. 3 shows two of the same preferred embodiment of devices according to the present invention, where the devices are shown in their starting position and with their respective swivel arm devices.
Fig. 4a, 4b, and 4c show a schematic drawing of the way a preferred embodiment of the device works together with the surface of the foreleg to detect an anatomical part, here in the shape of the malleolus.

All figures are schematically and not necessarily to scale, and they only show those parts, which are necessary for clarifying the invention, whereas the other parts have been omitted or merely intimated. The same reference numbers have been used in all figures about identical or corresponding details.

### Detailed description of preferred embodiments

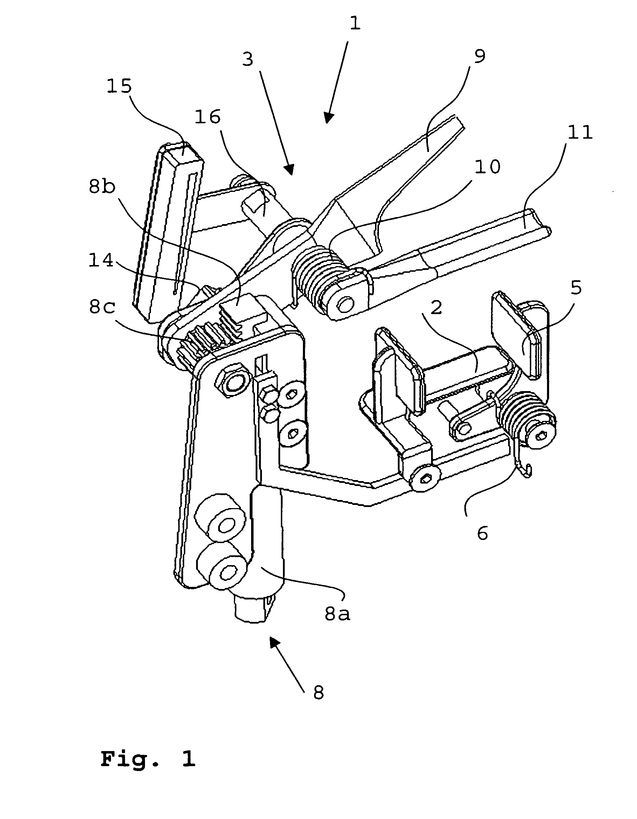

Fig. 1 shows a part of a device 1 for performing of a treatment process according to the present invention, where the device is shown in its starting position before reception of the foreleg and without a tool device. The device 1 comprises a gripping device 2, which is designed to fixate the foreleg (not shown) by means of a support means 5, which is pressed against the foreleg by means of a spring 6.

Within the idea of the invention, the spring may just as well be an air cylinder, a motor or the like. The gripping device 2 thus consists of a stationary part and a movable support means 5. The stationary part captures the foreleg and the support means 5 fixates the foreleg.

Furthermore, the device 1 comprises a sensor device 3, which is connected to the gripping device 2. The sensor device comprises a first means 8, which presses a first sensing element 9 against the foreleg to thus, during movement of the sensor device in relation to the foreleg, be able to detect an anatomical part on the foreleg. The first means consists of an air cylinder 8a, which in co-operation with a toothed rack 8b and a gear wheel 8c presses the first sensor device pickup against the foreleg, after which the detection can commence.

The device 1 may advantageously be pre-set before use based on a representative number of carcasses, so that the device in all probability will detect the desired anatomical part. The pre-setting is used because the same anatomical part may vary from one carcass to another, and because of the existence of other unevenness, such as skin folds and the like. During pre-setting, an interval is therefore defined, which determines the known distance between a predetermined zero point and the sensor device, when this is moved over the anatomical segment. The predetermined point may be the gripping device. Thus, as an example, when the first sensing element 9 is moved over the anatomical part, the distance to the gripping device 2 increases. When the distance lies within the predetermined interval, the sensor device is moved along the anatomical part and the treatment process is started by means of the tool device.

In a preferred embodiment the sensor device 3 further comprises another means in the shape of a spring 10 and another sensing element 11, as shown in Fig. 1. The second sensing element 11 is freely suspended in relation to the first sensing element 9 around a shaft 16, so that, in the connection between the first sensing element 9 and the second sensing element 11, there is a spring 10 to press the second sensing element 11 against the foreleg.

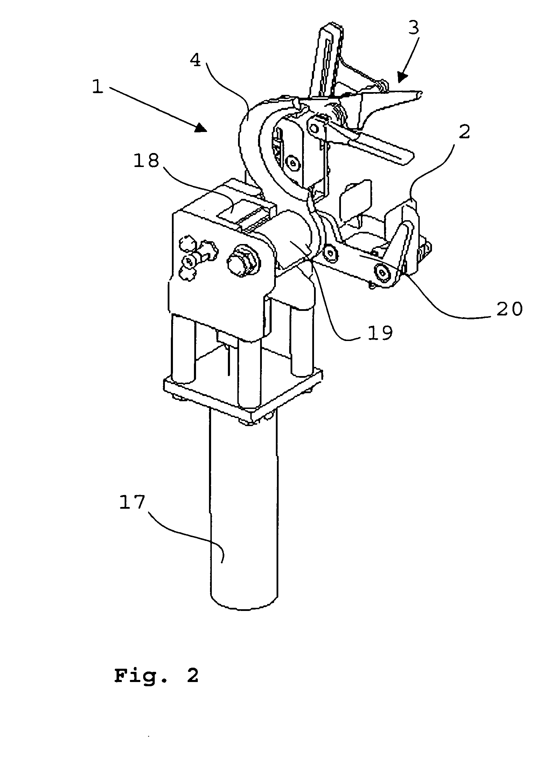

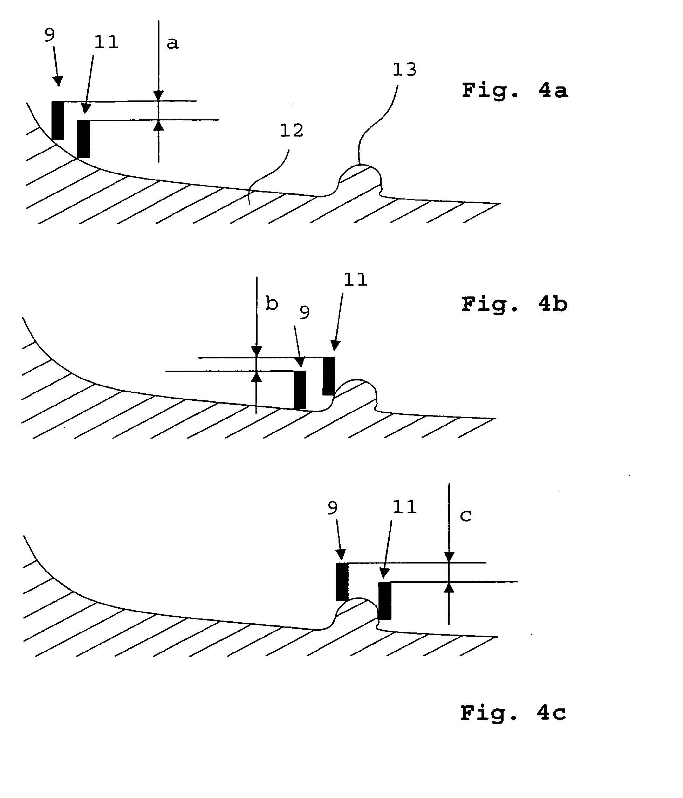

Thus, there is a difference in the individual positions of the sensing elements 9 and 11 during movement of the sensor device 3 along the foreleg over an anatomical part, which is used to detect the anatomical segment. In a preferred embodiment the device, as shown in Fig. 1, may comprise a detection means for this detection. The detection means comprises a transmitter 14, placed in connection with the first sensing element 9, and a receiver 15 placed in connection with the second sensing element. During detection, the transmitter 14 sends signals to the receiver 15, and when the receiver registers that the mutual distance of the sensing elements lies within a predetermined interval, please see below in relation to Fig. 4, a tool device 4 is initiated, as shown in Fig. 2, and thereby the treatment process.

The tool device shown in Fig. 2 is placed to perform the treatment process on the foreleg at a predetermined distance from the anatomical part and thereby in relation to the sensor device 3, which detects the anatomical part. In Fig. 2, the tool device 4 is shown as shears, however, it could as well be a knife, marking equipment, scraping equipment or the like. In the preferred embodiment shown in Fig. 2, the first knife 4 of the shears is moved by means of a driving mechanism comprising a cylinder 17, which moves a toothed rack 18, which again moves a gear wheel 19, on which the first knife 4 is mounted. When the first knife 4 is moved against the gripping device 2, the cutting off is done by the first knife 4 being pressed against a second stationary knife 20, so that the first knife and the second knife work together like shears. The gear wheel 19 is only equipped with teeth on one side for hygienic reasons, however, it could just as well have teeth on the other side.

As mentioned, the detection is performed by moving the sensor device 3 in relation to the foreleg. This can be done by moving the foreleg in the gripping device 2 and thereby movement in relation to the sensor device 3. It may also be done by having the device 1 comprising a moving means (not shown), which moves both the gripping device and the sensor device. In another preferred embodiment (not shown) the device 1 comprises a moving means, so that the sensor device is moved in relation to the foreleg, which is fixated in the gripping device 2.

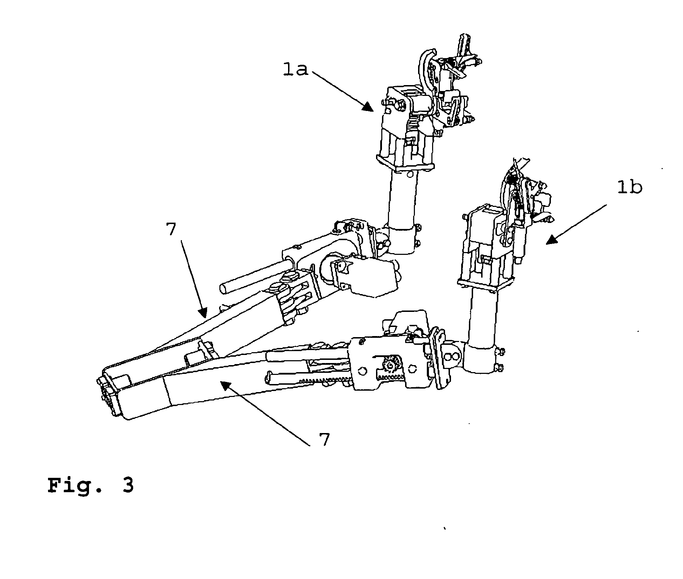

In Fig. 3 two devices 1a, 1b are shown. The device 1a should be used to perform a treatment process on one of the forelegs of a carcass, and the other device 1b should be used to perform a treatment process on the other foreleg of a carcass. Both devices are shown in connection with a swivel arm device 7, which is arranged to bring the gripping device into contact with the forelegs of the carcass, which primarily is in a fixture, which preferably positions the carcass halves.

Principally, the gripping device 2 is brought into contact with the foreleg, primarily from below and upwards, in a mainly vertical direction, when the swivel arm device 7 brings the gripping device 2 into contact with the foreleg in the passage between the foreleg and the carcass. This passage is the animal's arm pit, more precisely, in the elbow joint of the foreleg. Subsequently the whole device is moved in relation to the foreleg. By this means the foreleg is captured where it is fixated to the carcass, which is also the least movable part of the foreleg. As mentioned earlier, the movement is caused by the high speed, by which the carcasses travel from station to station. And, subsequently, when the whole device is moved towards the end of the foreleg, the foreleg and the movement are concurrently stabilised, due to inertia, prior to a precise performance of a treatment process.

When engaged with the foreleg, i.e. when the gripping device 2 is brought into contact with the foreleg and thereby fixates the foreleg, the sensing elements 9 and 11 are kept in contact with the exterior side of the foreleg, and the sensor device 3 is then moved as a minimum along the foreleg. When the sensor device 3 is moved along the foreleg over an anatomical part, e.g. the malleolus, the device will be able to register a difference in the distance of the first sensing element in relation to the gripping device 2 or any difference in the distance between the sensing elements, see below.

In Fig. 4a, 4b, 4c a sectional view of the foreleg 12 of a carcass with an anatomical part 13 is shown, here in the shape of a malleolus. In Fig. 4a the sensing elements 9 and 11 are shown immediately after the gripping device 2 is brought into contact with the foreleg 12, after which the sensing elements 9 and 11 are brought into contact with the top side of the foreleg 12 with a mutual distance a. In Fig. 4b the sensing elements 9 and 11 are shown, where the first sensing element 9 is moved over the malleolus. The value of the mutual distance b has now become negative in relation to a. It is thereby possible to adjust the device so that when a has changed the sign to b, and b lies within a predetermined interval, then it is the malleolus that the sensor device has detected. Furthermore, it is possible to use the second sensing element 11 to specify the detection of the malleolus 13 and thereby specify the subsequent treatment process by awaiting that the second sensing element 11 is about to move over the malleolus 13, i.e. that the value of the mutual distance changes the sign to the value c. When this value c lies within a predetermined interval, the tool device 4, and thereby the treatment process, is initiated. This double detection is especially advantageous in that the speed with which the carcasses are treated is very high. Thus there may arise vibrations during the detection along the foreleg which can result in a few skips, where the sensing elements perhaps do not have contact with the surface of the foreleg and therefore can have a longer distance in relation to each other or in relation to the gripping device than the factual distance.

In another preferred embodiment the detection means may comprise a releaser (not shown) placed in connection with the first sensing element and a sensor (not shown) placed in connection with the second sensing element. When the mutual distance of the sensing elements lies within the earlier mentioned interval, the releaser initiates the treatment process.

Furthermore, in a further preferred embodiment the device may comprise a memory device (not shown). The memory device stores the positions of the sensor device during the movement along the foreleg and determines the anatomical part based on the position of the sensor device in relation to the stored positions. After having determined the anatomical part, the memory device initiates the treatment process. Furthermore, the memory device may comprise a kind of signal processing, so that it compensates for general vibrations during detection, i.e. for the sensor device positions missing due to these vibrations, and thereby calculate when, during movement of the sensor device, the tool device must be initiated.

In another embodiment the gripping device may be funnel-shaped to ease the capture of forelegs of different sizes and to fixate the foreleg at right angles to the direction of motion of the sensor device during detection of the anatomical part. Furthermore, the funnel facilitates the capture of a foreleg or similar with more or less uncontrollably movement because of the inertia in the carcass, as mentioned earlier, in particular if an approximate positioning of the foreleg has not been provided by placement of the carcass in a fixture.

In a preferred embodiment the first sensing element or both sensing elements are curved to adjust to the shape of the foreleg, to hereby obtain more contact points with the surface of the foreleg when detecting the anatomical part.

Furthermore, the invention relates to a sensor device 3 for detection of an anatomical part by movement of the sensor device 3 along a foreleg 12 of a carcass, which comprises a first means 8 for, when engaged with the foreleg 12, keeping a first sensing element 9 in contact with the foreleg, a second means and a second sensing element 11, which is freely suspended in relation to the first sensing element 9, so that any difference in their mutual positions may be detected by moving the sensor device 3 along the foreleg over the anatomical part, and a detection means for detection of the mutual position of the sensing elements 9, 11, and where the detection means comprises a transmitter 14 placed on the sensing element 9 and a receiver 15 placed on the second sensing element 11 or vice versa, said transmitter sends signals to the receiver when the sensor device 3 is moved along the foreleg.

By use of the above mentioned device precise detection and performance of a precise treatment process on a foreleg of a carcass, preferably a carcass half, are obtained.

The device 1 may according to the invention also expediently be incorporated into a fixture, which fixates the carcasses in connection with another slaughtering process, thus deriving advantage from the stationary position of the carcass, which facilitates the capture of the foreleg. Furthermore, implementation of the device on already existing butchering equipment on the slaughtering line is cost-saving and space-saving.

Though the above invention is described in relation to preferred embodiments of the invention, it is evident to a man skilled in the art that several modifications and improvements may be made without departing from the idea of the invention, which is defined in the following claims.

## Claims

1. A device (1) for performing a treatment process on a foreleg of a carcass, primarily a carcass half, **characterised in that** the device (1) comprises a gripping device (2), which is arranged to hold the foreleg, a sensor device (3), which is arranged to detect an anatomical part on the foreleg, and a tool device (4) to perform the treatment process on the foreleg at a predetermined distance from the anatomical part.

2. A device according to claim 1, wherein the device (1) comprises a moving means, which is arranged to move at least the sensor device (3) along the foreleg to detect the anatomical part.

3. A device according to claims 1 or 2, wherein the sensor device (3) comprises a first means (8), which while the gripping device holds the foreleg keeps a first sensing element (9) in contact with the foreleg.

4. A device according to claim 3, wherein the sensor device (3) furthermore comprises a second means and a second sensing element (11), said second sensing element (11) is freely suspended in relation to the first sensing element (9), so that any difference in their individual position is detected with a movement of the sensor device (3) along the foreleg over the anatomical part.

5. A device according to claim 4, wherein the sensor device (3) comprises a detection means to detect the mutual positions of the sensing elements (9, 11).

6. A device according to claim 5, wherein the detection means comprises a transmitter (14) placed in connection with the first sensing element (9) and a receiver (15) placed in connection with the second sensing element (11) or vice versa, said transmitter (14) sends signals to the receiver (15) when the sensor device (3) is moved along the foreleg.

7. A device according to claim 5, wherein the detection means comprises a releaser placed in connection with the first sensing element (9) and a sensor placed in connection with the second sensing element (11) or vice versa, said releaser is arranged to initiate the treatment process by influencing the sensor device.

8. A device according to claims 2-7, wherein the device (1) comprises a memory device, which is arranged to store the positions from the sensor device (3) moved along the foreleg, and which furthermore is arranged, based on the positions of the sensor device (3) in relation to the stored positions, to determine the anatomical part and thereby initiate the treatment process.

9. A device according to claims 1-8, wherein the tool device (4) is shears, knife, marking equipment, scraping equipment or the like.

10. A device according to claims 1-9, wherein the gripping device (2) is placed on a swivel arm device arranged to bring the gripping device (2) into contact with the foreleg, primarily from below and upwards, in a mainly vertical direction.

11. A device according to claims 1-10, wherein the gripping device (2) comprises a support means (5), which is arranged to fixate the foreleg when engaged with the same.

12. A device according to claims 10 and 11, wherein the sensor device (3), the gripping device (2), the swivel arm device and the tool device (4) are moved along the foreleg during detection of the anatomical part.

13. A method for performing a treatment process on a foreleg of a carcass, preferably a carcass half, **characterised by** the steps: holding the foreleg by means of a gripping device, detecting an anatomical part on the foreleg by means of a sensor device and performing a treatment process on the foreleg by means of a tool device at a predetermined distance from the anatomical part.

14. Use of a device according to claims 1-12 for performing a treatment process on a foreleg of a carcass, preferably a carcass half.

## Patentansprüche

1. Einrichtung (1) zum Durchführen eines Behandlungsvorgangs an einem Vorderbein eines Schlachttierkörpers, in erster Linie einer Schlachttierkörperhälfte, **dadurch gekennzeichnet, dass** die Einrichtung (1) eine Greifeinrichtung (2), die angeordnet ist, um das Vorderbein zu halten, eine Sensoreinrichtung (3), die angeordnet ist, um einen anatomischen Teil an dem Vorderbein zu erfassen, und eine Werkzeugeinrichtung (4) zum Durchführen des Behandlungsvorgangs an dem Vorderbein in einem vorbestimmten Abstand von dem anatomischen Teil umfasst.

2. Einrichtung nach Anspruch 1, wobei die Einrichtung (1) ein Bewegungsmittel umfasst, das angeordnet ist, um mindestens die Sensoreinrichtung (3) entlang dem Vorderbein zu bewegen, um den anatomischen Teil zu erfassen.

3. Einrichtung nach den Ansprüchen 1 oder 2, wobei die Sensoreinrichtung (3) ein erstes Mittel (8) umfasst, das einen ersten Fühler (9) in Kontakt mit dem Vorderbein hält, während die Greifeinrichtung das Vorderbein hält.

4. Einrichtung nach Anspruch 3, wobei die Sensoreinrichtung (3) weiterhin ein zweites Mittel und einen zweiten Fühler (11) umfasst, wobei der zweite Fühler (11) bezogen auf den ersten Fühler (9) frei aufgehängt ist, so dass jegliche Differenz in ihrer individuellen Position mit einer Bewegung der Sensoreinrichtung (3) entlang dem Vorderbein über dem anatomischen Teil erfasst wird.

5. Einrichtung nach Anspruch 3, wobei die Sensoreinrichtung (3) ein Erfassungsmittel umfasst, um die beiderseitigen Positionen der Fühler (9, 11) zu erfassen.

6. Einrichtung nach Anspruch 5, wobei das Erfassungsmittel einen Sender (14), der in Verbindung mit dem ersten Fühler (9) platziert ist, und einen Empfänger (15), der in Verbindung mit dem zweiten Fühler (11) platziert ist, oder umgekehrt, umfasst, wobei der Sender (14) Signale an den Empfänger (15) sendet, wenn die Sensoreinrichtung (3) entlang dem Vorderbein bewegt wird.

7. Einrichtung nach Anspruch 5, wobei das Erfassungsmittel eine Freigabeeinrichtung, die in Verbindung mit dem ersten Fühler (9) platziert ist, und einen Sensor (11), der in Verbindung mit dem zweiten Fühler (11) platziert ist, oder umgekehrt, umfasst, wobei die Freigabeeinrichtung angeordnet ist, um den Behandlungsvorgang durch Beeinflussen der Sensoreinrichtung einzuleiten.

8. Einrichtung nach den Ansprüchen 2-7, wobei die Einrichtung (1) eine Speichereinrichtung aufweist, die angeordnet ist, um die Positionen von der Sensoreinrichtung (3) zu speichern, die entlang dem Vorderbein bewegt wird, und die weiterhin basierend auf den Positionen der Sensoreinrichtung (3) im Verhältnis zu den gespeicherten Positionen angeordnet ist, um den anatomischen Teil zu bestimmen und **dadurch** den Behandlungsvorgang einzuleiten.

9. Einrichtung nach den Ansprüchen 1-8, wobei die Werkzeugeinrichtung (4) eine Schere, ein Messer, eine Markierungseinrichtung, eine Schabeeinrichtung oder dergleichen ist.

10. Einrichtung nach den Ansprüchen 1-9, wobei die Greifeinrichtung (2) auf einer Schwenkarmeinrichtung platziert ist, die angeordnet ist, um die Greifeinrichtung (2) in einer im Wesentlichen vertikalen Richtung in Kontakt mit dem Vorderbein zu bringen, in erster Linie von unten und nach oben.

11. Einrichtung nach den Ansprüchen 1-10, wobei die Greifeinrichtung (2) ein Stützmittel (5) umfasst, das angeordnet ist, um das Vorderbein zu fixieren, wenn es sich mit ihm in Eingriff befindet.

12. Einrichtung nach den Ansprüchen 10 und 11, wobei die Sensoreinrichtung (3), die Greifeinrichtung (2), die Schwenkarmeinrichtung und die Werkzeugeinrichtung (4) während der Erfassung des anatomischen Teils entlang dem Vorderbein bewegt werden.

13. Verfahren zum Ausführen eines Behandlungsvorgangs an einem Vorderbein eines Schlachttierkörpers, vorzugsweise einer Schlachttierkörperhälfte, **gekennzeichnet durch** folgende Schritte: Halten des Vorderbeins mittels einer Greifeinrichtung, Erfassen eines anatomischen Teils an dem Vorderbein mittels einer Sensoreinrichtung und Durchführen eines Behandlungsvorgangs an dem Vorderbein mittels einer Werkzeugeinrichtung in einem vorbestimmten Abstand von dem anatomischen Teil.

14. Verwendung einer Einrichtung nach den Ansprüchen 1-12 zum Durchführen eines Behandlungsvorgangs an einem Vorderbein eines Schlachttierkörpers, vorzugsweise einer Schlachttierkörperhälfte.

## Revendications

1. Dispositif (1) pour effectuer un processus de traitement sur une patte antérieure d'une carcasse, principalement une demi-carcasse,
**caractérisé en ce que** le dispositif (1) comporte un dispositif de préhension (2), qui est prévu pour supporter la patte antérieure, un dispositif formant détecteur (3), qui est prévu pour détecter une partie anatomique sur la patte antérieure, et un dispositif formant outil (4) pour effectuer le processus de traitement sur la patte antérieure à une distance prédéterminée de la partie anatomique.

2. Dispositif selon la revendication 1, dans lequel le dispositif (1) comporte des moyens de déplacement, qui sont prévus pour déplacer au moins le dispositif formant détecteur (3) le long de la patte antérieure pour détecter la partie anatomique.

3. Dispositif selon la revendication 1 ou 2, dans lequel le dispositif formant détecteur (3) comporte des premiers moyens (8), qui tandis que le dispositif de préhension supportent la patte antérieure, maintiennent un premier élément de détection (9) en contact avec la patte antérieure.

4. Dispositif selon la revendication 3, dans lequel le dispositif formant détecteur (3) comporte en outre des seconds moyens et un second élément de détection (11), ledit second élément de détection (11) étant suspendu librement par rapport au premier élément de détection (9), de sorte qu'une quelconque différence dans leur position individuelle est détectée avec un déplacement du dispositif formant détecteur (3) le long de la patte antérieure au-dessus de la partie anatomique.

5. Dispositif selon la revendication 4, dans lequel le dispositif formant détecteur (3) comporte des moyens de détection pour détecter les positions mutuelles des éléments de détection (9, 11).

6. Dispositif selon la revendication 5, dans lequel les moyens de détection comportent un émetteur (14) placé en association avec le premier élément de détection (9), et un récepteur (15) placé en association avec le second élément de détection (11), ou vice et versa, ledit émetteur (14) envoyant des signaux vers le récepteur (15) lorsque le dispositif formant détecteur (3) est déplacé le long de la patte antérieure.

7. Dispositif selon la revendication 5, dans lequel les moyens de détection comportent un dispositif de libération placé en association avec le premier élément de détection (9), et un détecteur placé en association avec le second élément de détection (11), ou vice et versa, ledit dispositif de libération étant prévu pour déclencher le processus de traitement en influençant le dispositif formant détecteur.

8. Dispositif selon l'une quelconque des revendications 2 à 7, dans lequel le dispositif (1) comporte un dispositif formant mémoire, qui est prévu pour mémoriser les positions à partir du dispositif formant détecteur (3) déplacé le long de la patte antérieure, et qui en outre est prévu, sur la base des positions du dispositif formant détecteur (3) par rapport aux positions mémorisées, pour déterminer la partie anatomique, et déclencher ainsi le processus de traitement.

9. Dispositif selon l'une quelconque des revendications 1 à 8, dans lequel le dispositif formant outil (4) est constitué de ciseaux, d'une lame, d'un équipement de marquage, d'un équipement de grattage, ou analogue.

10. Dispositif selon l'une quelconque des revendications 1 à 9, dans lequel le dispositif de préhension (2) est placé sur un dispositif formant bras pivotant prévu pour ramener le dispositif de préhension (2) en contact avec la patte antérieure, principalement à partir du dessous et vers le haut, dans une direction principalement verticale.

11. Dispositif selon l'une quelconque des revendications 1 à 10, dans lequel le dispositif de préhension (2) comporte des moyens de support (5), qui sont prévus pour fixer la patte antérieure lorsqu'ils sont en prise avec celle-ci.

12. Dispositif selon les revendications 10 et 11, dans lequel le dispositif formant détecteur (3), le dispositif de préhension (2), le dispositif formant bras pivotant et le dispositif formant outil (4) sont déplacés le long de la patte antérieure pendant une détection de la partie anatomique.

13. Procédé pour effectuer un processus de traitement sur une patte antérieure d'une carcasse, de préférence une demi-carcasse, **caractérisé en ce qu'**il comporte les étapes consistant à : supporter la patte antérieure par l'intermédiaire d'un dispositif de préhension, détecter une partie anatomique sur la patte antérieure par l'intermédiaire d'un dispositif formant détecteur, et effectuer un processus de traitement sur la patte antérieure par l'intermédiaire d'un dispositif formant outil à une distance prédéterminée par rapport à la partie anatomique.

14. Utilisation d'un dispositif selon l'une quelconque des revendications 1 à 12 pour effectuer un processus de traitement sur une patte antérieure d'une carcasse, de préférence une demi-carcasse.
